(19) **Europäisches Patentamt**
**European Patent Office**
**Office européen des brevets**

(11) **EP 4 328 806 A1**

(12) # EUROPEAN PATENT APPLICATION

(43) Date of publication:
**28.02.2024  Bulletin 2024/09**

(21) Application number: **22191435.1**

(22) Date of filing: **22.08.2022**

(51) International Patent Classification (IPC):
**G06N 5/022** *(2023.01)*    **G06N 5/045** *(2023.01)*
**G06N 20/00** *(2019.01)*    *G06N 3/126* *(2023.01)*

(52) Cooperative Patent Classification (CPC):
**G06N 5/022; G06N 5/045; G06N 20/00;**
G06N 3/126

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **Busch, Julian
81539 München (DE)**
• **Kehrer, Johannes
81829 München (DE)**
• **Lebacher, Michael
84513 Töging am Inn (DE)**
• **Weber, Stefan Hagen
81927 München (DE)**

(74) Representative: **Siemens Patent Attorneys
Postfach 22 16 34
80506 München (DE)**

(54) **GRAPHICAL REPRESENTATION OF EXPLAINABLE ARTIFICIAL INTELLIGENCE**

(57)    A graph is determined based on an explainable artificial intelligence analysis of predictions made by a machine-learning algorithm. Global dependencies between different data points are highlighted by the graph.

It is possible to consider bi-variate feature interaction relevance values for pairs of features, as well as univariate feature relevance values for individual features.

FIG 4

251

241

242

**EP 4 328 806 A1**

**Description**

TECHNICAL FIELD

Various examples of the disclosure relate to techniques of explainable artificial intelligence. Various examples of the disclosure specifically relate to providing a graphical representation of a graph that is associated with an explainable artificial intelligence analysis of a machine-learning algorithm.

BACKGROUND

Machine-learning (ML) algorithms are applied in various industry fields. Technical devices generate large amounts of data; ML algorithms can process the data, e.g., to improve productivity, create additional user value, or for control functionality. Data from sensors is omnipresent in all kinds of heavy machinery and equipment.

For example, one use case of sensors is monitoring the functionality of heavy machinery such as pumps, turbines, die casting machines, etc. To do so, sensors are installed on these machines and measure different physical conditions such as current, temperature, pressure; this enables monitoring of the state of the system as a whole. If the machinery is subject to different damages, changes in the machine state, etc. the sensor values typically show suspicious patterns and anomalies in the data.

According to prior art implementations, ML algorithms can be trained to detect these anomalies.

Such prior art implementations face certain restrictions and drawbacks. For instance, the data output by sensors typically includes time series of one or more observables. The structure of the data is complex, and accordingly the ML algorithms tend to be complex themselves. The operation of such ML algorithms is accordingly typically not human-understandable, which is sometimes referred to as "black-box ML algorithms". This means that it is not possible to understand how the ML algorithm behaves globally, i.e., how the ML algorithm processes the data in general, and locally, i.e., how a certain prediction is made. This in turn makes it difficult to configure an ML algorithm to provide reliable output. It also leads to problems with the detection of root-causes of anomalies and consequently to a lack of trust and acceptance from user perspective. It is then sometimes not possible to appropriately control the technical device based on the output of the ML algorithm, because an action to take, e.g., with respect to a detected anomaly is unclear.

SUMMARY

Accordingly, a need exists for advanced techniques of processing data of a technical system using an ML algorithm. Specifically, a need exists for advanced techniques which mitigate or overcome at least some of the above-identified restrictions and drawbacks. A need exists for human-understandable explanations of an output of the ML algorithm, e.g., a detected anomaly in the data.

This need is met by the features of the independent claims. The features of the dependent claims define embodiments.

A computer-implemented method includes obtaining a plurality of feature vectors. The feature vectors of the plurality of feature vectors are indicative of operational characteristics of a technical device. Each one of the plurality of feature vectors includes multiple respective feature values for respective features. The method also includes determining, for each one of the plurality of feature vectors, univariate feature relevance values for the feature values of the respective feature vector with respect to a prediction of a machine-learning algorithm. The prediction of the machine-learning algorithm is based on the respective feature vector. Also, for each one of the plurality of feature vectors, bivariate feature interaction relevance values are determined for pairs of the feature values of the respective feature vector with respect to the prediction of the machine-learning algorithm that is based on the respective feature vector. The method also includes combining, for each feature of the feature vectors of the plurality of feature vectors, the respective univariate feature relevance values associated with different ones of the plurality of feature vectors, to obtain aggregated univariate feature relevance vectors for the features. The method also includes combining, for each pair of the features of the feature vectors of the plurality of feature vectors, the bivariate feature interaction relevance values that are associated with different ones of the plurality of feature vectors, to obtain aggregated bivariate feature interaction relevance values for the pairs of features. Furthermore, the method includes determining a global feature graph. Each node of the global feature graph is associated with a respective feature of the plurality of feature vectors. Edges of the global feature graph correspond to the aggregated bivariate feature interaction relevance values of the respective pair of features. Furthermore, the method also includes determining and outputting a graphical representation of the global feature graph. At least one of a length or a thickness of the edges of the graphical representation of the global feature graph represents the respective aggregated bivariate feature interaction relevance values.

Using such techniques, global dependencies between explanations of a prediction of the machine-learning algorithm can be visualized using the global feature graph. The bivariate feature interaction relevance values are used to this respect.

At least one of a size or a color of the nodes of the graphical representation of the global feature graph may represent the respective aggregated univariate relevance values that are associated with the respective features.

Thereby, self-dependencies can be illustrated in the global feature graph.

The method may further include selecting a subset of nodes of the global feature graph based on at least one of the aggregated univariate feature relevance values or the aggregated bivariate feature interaction relevance values. Here, the graphical representation of the global feature graph can then highlight the subset of nodes. Thereby, certain particular nodes of interest can be highlighted. Other nodes of reduced relevance can be excluded or shown with less emphasis.

It would be possible that the subset of nodes of the global feature graph is selected further based on account of the nodes in the subset.

For instance, by considering the count of the nodes in the subset, it can be ensured that not too many nodes are included on one hand, while, on the other hand, it can be ensured that not too few nodes are included in the subset. By preventing too many nodes to be included in the subset, the subset can be tailored to match a size that is comprehensible by the viewer.

According to examples, it would be possible that the subset of the nodes of the global feature graph is determined using an iterative optimization technique that includes a goal function. Here, the goal function may penalize a higher count of the nodes in the subset. Alternatively or additionally, the goal function may reward higher absolute values of a sum of the at least one of the aggregated univariate feature relevance values or the aggregated bivariate feature interaction relevance values across the nodes in the subset. For instance, a genetic algorithm may be used. A gradient descent optimization can be used. A simplex optimization may be used.

By using an iterative optimization, different configurations of the subset can be tested with respect to the value of the goal function.

According to examples, a computer-implemented method includes obtaining a feature vector. The feature vector is indicative of operational characteristics of a technical device. The feature vector includes multiple feature values for multiple features. The method also includes determining univariate feature relevance values for the feature values of the feature vector with respect to a prediction of a machine-learning algorithm. The prediction is based on the feature vector. The method also includes determining bivariate feature interaction relevance values for pairs of the feature values of the feature vector with respect to the prediction of the machine learning algorithm that is based on the feature vector. Further, the method includes determining a local feature graph. Nodes of the local feature graph are associated with the features of the feature vectors, while edges of the local feature graph correspond to the bivariate feature interaction relevance values of the respective pair of features. The method also includes determining and outputting a graphical representation of the local feature graph. At least one of a length or a thickness of the edges of the graphical representation represents the respective bivariate feature interaction relevance values.

Hereby, local explanations with respect to the feature vector can be considered, i.e., without considering multiple feature vectors. At the same time, within the prediction of the machine learning algorithm that is based on a given feature vector, interdependencies can be considered by plotting the edges so that they represent the bivariate feature interaction relevance values.

At least one of a size or a color of the nodes of the graphical representation of the local feature graph may represent the univariate feature relevance values of the respective features.

Thereby, also the univariate feature relevance values can be visualized within the local feature graph.

It is possible that the graphical representation is output as part of a computer-aided design or maintenance program of the technical device. The features quantify different properties of the technical device.

A computer program includes program code that is executable by at least one processor. The at least one processor, upon executing the program code, is configured to perform obtaining a plurality of feature vectors that are indicative of operational characteristics of a technical device. Each one of the plurality of feature vectors includes multiple respective feature values for respective features. The at least one processor is further configured to perform determining, for each one of the plurality of feature vectors, univariate feature relevance values for the feature values of the respective feature vector with respect to a prediction of a machine-learning algorithm that is based on the respective feature vector, as well as bivariate feature interaction relevance values for pairs of the feature values of the respective feature vector with respect the prediction of the machine-learning algorithm that is based on the respective feature vector; as well as combining, for each feature of the feature vectors of the plurality of feature vectors, the respective univariate feature relevance values that are associated with different ones of the plurality of feature vectors, to obtain aggregated univariate feature relevance values for the features. The at least one processor, upon executing the program code, is further configured to perform combining, for each pair of the features of the feature vectors of the plurality of feature vectors, the bivariate feature interaction relevance values associated with different ones of the plurality of feature vectors. Thereby, aggregated bivariate feature interaction relevance values for the pairs of features are obtained. The at least one processor, upon executing the program code, is further configured to perform determining a global feature graph, wherein each node of the global feature graph is associated with a respective feature of the plurality of feature vectors, wherein edges of the global feature graph correspond to the aggregated bivariate feature interaction relevance values of the respective pair of features; and determining and outputting a graphical representation of the global feature graph, wherein at least one of a length or thickness of the edges of the graphical representation of the global feature graph represents the respective aggregated bivariate feature interaction relevance values.

A corresponding device including the at least one processor and a memory to store the program code is also disclosed.

A computer program includes program code that is executable by at least one processor. The at least one processor, upon executing the program code, being configured to perform obtaining a feature vector. The feature vector is indicative of operational characteristics of a technical device. The feature vector includes multiple feature values for multiple features. The at least one processor, upon executing the program code, is further configured to perform determining univariate feature relevance values for the feature values of the feature vector with respect to a prediction of a machine-learning algorithm that is based on the feature vector. Also, bivariate feature interaction relevance values are determined for pairs of the feature values of the feature vector with respect to the prediction of the machine-learning algorithm that is based on the feature vector. The at least one processor, upon executing the program code, is further configured to perform determining a local feature graph, wherein nodes of the local feature graph are associated with the features of the feature vector and edges of the local feature graph correspond to the bivariate feature interaction relevance values of the respective pair of features. The at least one processor, upon executing the program code, is further configured to perform determining and outputting a graphical representation of the local feature graph, wherein at least one of a length or thickness of the edges of the graphical representation represents the respective bivariate feature interaction relevance values.

A corresponding device is also provided. The device includes the at least one processor as well as a memory that is storing the program code.

It is to be understood that the features mentioned above and those yet to be explained below may be used not only in the respective combinations indicated, but also in other combinations or in isolation without departing from the scope of the invention.

BRIEF DESCRIPTION OF THE DRAWINGS

FIG. 1    schematically illustrates a system including a processing device and a technical device according to various examples.

FIG. 2    schematically illustrates a processing pipeline for processing data associated with a technical device according to various examples.

FIG. 3    is a flowchart of a method according to various examples.

FIG. 4    is an illustration of a graphical representation of a graph according to various examples.

FIG. 5    is an illustration of a graphical representation of a graph according to various examples.

DETAILED DESCRIPTION

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques of analysing predictions of an ML algorithm are disclosed. Various kinds and types of ML algorithms can benefit from the techniques disclosed herein. Examples include anomaly detection based on ML algorithms. Other examples include a classification or regression tasks performed by a ML algorithm. Examples of ML algorithms include deep neural network, e.g., convolutional neural networks, support vector machines, multilayer perceptrons, etc.

The ML algorithms can operate based on feature vectors that are indicative of operational characteristics of a technical device.

Various kinds and types of technical devices can be considered. Examples include, e.g., factory equipment, e.g., manufacturing apparatuses, robots, or assembly line parts. Further examples include power plants or powerplant parts, e.g., turbines or generators. Examples include mobility infrastructure equipment, e.g., people mover, automated escalators, lifts, etc. Further examples include heavy machinery such as pumps, turbines, die casting machines, etc. Further examples include vehicles, e.g., cars, locomotives, airplanes, or ships.

Various examples pertain to explaining predictions of a ML algorithm. The ML algorithm makes predictions based on the feature vectors. A prediction may sometimes be made based on a single feature vector. In other scenarios, a prediction may be based on multiple feature vectors.

A graphical representation of a graph is output that explains the prediction provided by the ML algorithm. The graph is determined using XAI techniques. To determine the graph, priorart techniques of XAI may be employed. The graph includes multiple nodes that represent data points of the prediction. Each data point can be associated with a feature of the feature vectors. The feature vectors input to the ML algorithm include - according to their dimensionality - a certain number of feature values, i.e., the feature vectors include feature values for multiple features. Different feature vectors include different feature values for the same feature.

A multitude of XAI methods for determining are available in the prior art and can be relied upon. See, e.g., Lundberg, Scott M., and Su-In Lee. "A unified approach to interpreting model predictions." Advances in neural information processing systems 30 (2017) - the so-called SHAP method. Shapley values can be calculated. The Shapley value is the average marginal contribution of that feature value to the prediction of the ML algorithm. Shapley values provide the additive influence of each feature value on the specific, loFcal prediction of the ML algorithm Also see Ribeiro, Marco Tulio, Sameer Singh, and Carlos Guestrin. "" Why should i trust you?" Explaining the predictions of any classifier." Proceedings of the 22nd ACM SIGKDD international conference on knowledge discovery and data mining. 2016 - the so-called LIME method.

Hereinafter, multiple variants of graphs built based on XAI analysis of the ML algorithm will be disclosed. So-called feature interaction graphs will be disclosed. Different variants of the graphs enable a graphical representation of univariate feature relevance values as well as bivariate feature interaction relevance values for interacting features on a global and local level. Feature relevance values are sometimes also referred to as feature importance values. Feature relevance values specify the marginal contribution of respective feature values (univariate feature relevance values) or pairs of feature values (bivariate feature interaction relevance values) to the prediction of the ML algorithm.

Once a graph has been determined, it is possible to determine and output a graphical representation of the graph. One or more graphical properties - such as the length or thickness of edges of the graphical representation - can then represent relevance values. Multiple graphical representations can be determined for one and the same graph. This helps to tailor the graphical representation of the graph to the requirements and cognitive capabilities of the user, as well as to tailor the graphical representation based on the underlying structure of the data to investigate and explore the respective data.

As will be shown herein in further detail, the graphical representation is configured to be easily interpretable by domain experts and non-expert users. Using the graph helps to bridge the gap between strictly global and strictly local explanations. Common explanation patterns shared by groups of data points are visualized by the graphical representation of the graph. Also, anomalous explanations are visualized by the graphical representation of the graph.

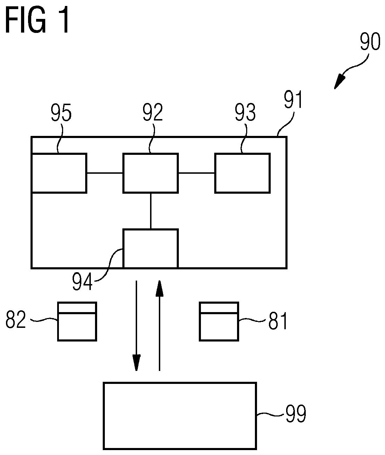

FIG. 1 schematically illustrates a system 90 according to various examples. The system 90 includes a processing device 91 and a technical device 99. The technical device 99 can provide, to the processing device 91, state data 81. The state data 81 could be based on sensor data, e.g., could be indicative of one or more physical observables characterizing the operation of the technical device 99. Alternatively or additionally, the state data 81 could be based on control signals used by the technical device 99 for operations, e.g., an actuator occurrence, actuator voltages, to give just a few examples.

The processing device 91 includes a processor 92 that is coupled with a non-volatile memory 93. The processor 92 is also coupled with a communications interface 94. The processor 92 can receive and transmit data from and towards the technical device 99 via the communications interface 94. The processor 92, based on program code stored in the memory 93, can analyze operational characteristics of the technical device 99.

In detail, based on the state data 81, it would be possible to determine multiple feature vectors indicative of operational characteristics of the technical device 99. The feature vectors can have a certain dimensionality; i.e., include feature values for a certain number of features. Different feature values may be associated with different aspects of the state data 81 or may be associated with different dimensions of a given aspect of the state data 81. For instance, a first feature may define a rounds per minute value of a pump and the second feature may define a current value of an electrical current of the pump and a third feature may define a voltage of the pump and a fourth feature may define a temperature value Of a temperature sensor integrated into the pump, etc. This is just one example; many other examples are conceivable.

Then, the processor 92 can load and execute program code from the memory 93. Upon loading and executing the program code, the processor 92 can process the feature vectors using an ML algorithm. Also, the processor 92 can perform an XAI analysis to explain outputs of the ML algorithm based on the feature vectors. Based on the output of the ML algorithm and/or an explanation associated with the output, it would be possible to control the technical device 99. For this, control data 82 may be output by the processor 92 via the communications interface 94 towards the technical device 99.

Furthermore, the processing device 91 includes a human machine interface (HMI) 95. The HMI 95 could include, e.g., a monitor, a keyboard, a mouse, etc. The processor 92 can determine and output a graphical representation of a graph that is determined based on the XAI analysis and output the graphical representation via the HMI 95. In particular, it would be possible to provide a graphical user interface (GUI) to a user via the HMI 95. The graphical representation can be an interactive object of the GUI so that the user may interact and appropriately configure the graphical representation, i.e., change one or more properties of the graphical representation.

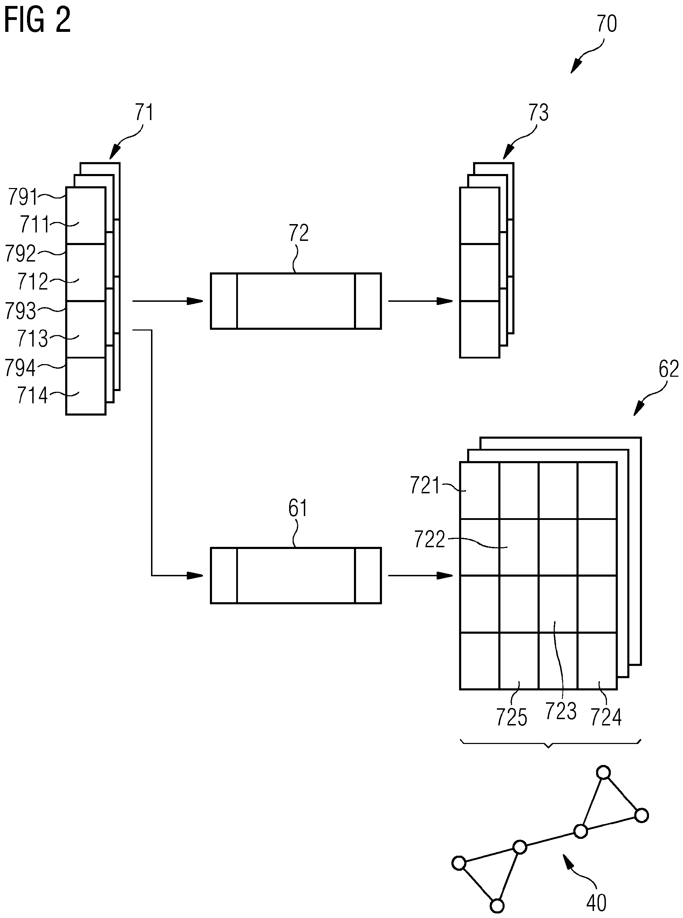

Details with respect to such logic executed by the processor 92 are illustrated next in connection with FIG. 2.

FIG. 2 schematically illustrates a processing pipeline 70 according to various examples. A feature vector 71 is illustrated. The feature vector 71 includes multiple feature values 711-714 for respective features 791-794. The number of features (and, hence, feature values) is defined by the dimensionality of the feature vectors 71. The feature vector 71 is processed by the ML algorithm 72; the ML algorithm outputs and output vector 73.

As illustrated in FIG. 2, the ML algorithm 72 can process multiple feature vectors 71 and output a respective output vector 73 for each processed feature vector 71. A prediction can be based on multiple output vectors 73 and, hence, based on multiple processed feature vectors 71.

FIG. 2 also schematically illustrates aspects with respect to determining a feature relevance matrix 62. For this, an XAI algorithm 61 processes the feature vector(s) 71 and outputs the feature relevance matrices 62. Each feature relevance matrix 62 includes multiple feature relevance values 721-724, 725.

In detail, each feature relevance matrix 62 includes univariate feature relevance values 721-724 arranged on its diagonal; these univariate feature relevance values 721-724 depend on a respective one of the feature values 711-714. The off-diagonal elements of each feature relevance matrix 62 include bivariate feature interaction relevance values 725 (not all of these are labeled in FIG. 2) associated with pairs of the feature values. The univariate feature relevance values 721-724 explain the relative contribution of each respective feature value 711-714 to the prediction of the ML algorithm 72, i.e., the output vector 73. For instance, if the feature value 712 has a relatively high impact on the output vector 73, then the associated feature relevance value 712 will take a comparatively high value, if compared to the other feature relevance value 721, 723, 724. Likewise, if the pair of feature value 711, 712 has a relatively high impact on the output vector 73, then the bivariate feature interaction relevance value 725 at the corresponding off-diagonal element of the feature relevance matrix 62 will take a comparatively high value.

It is possible to obtain, from multiple feature vectors, multiple feature relevance matrices. These multiple feature relevance vectors provide local explanations of the behavior of the ML algorithm 72 for the respective feature vector.

By comparing corresponding entries across the multiple feature relevance matrices, global explanations associated with the respective feature or pair of features can be considered. Respective combinations of univariate feature relevance values are herein referred to as aggregated univariate feature relevance values; and respective combinations of bivariate feature interaction relevance values, across the multiple feature relevance matrices, are referred to as aggregated bivariate feature interaction relevance values.

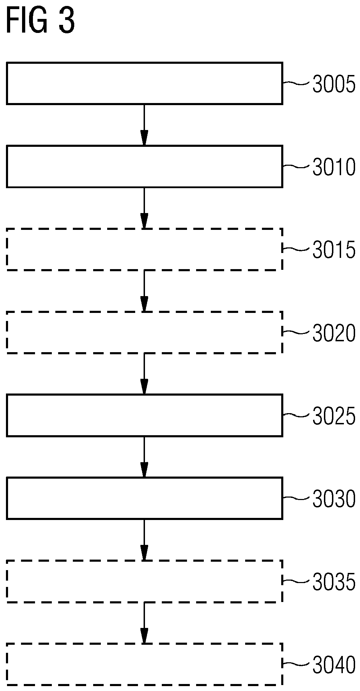

Based on the XAI analysis, more specifically based on the univariate feature relevance values and bivariate feature interaction relevance values, or the aggregated univariate feature relevance values and the aggregated bivariate feature interaction relevance values, it is possible to determine a graph 40. Respective techniques are explained below in connection with the method of FIG. 3.

FIG. 3 is a flowchart of a method according to various examples. For instance, the method of FIG. 3 may be executed by the processor 92 of the processing device 91, upon loading and executing program code from the memory 93.

For instance, the method of FIG. 3 could be executed as part of a computer-aided design or maintenance process of a technical device (cf. FIG. 1: technical device 99). For instance, properties of the technical device can be analyzed based on feature vectors that include feature values that qualify respective properties of the technical device. An ML algorithm can process the feature vectors to make predictions for a hidden state of the technical device. XAI techniques can be employed to explain the predictions. Based on such explanation, it would then be possible to re-design or re-configure / control the technical system (cf. FIG. 1: control data 82).

At box 3005, one or more feature vectors (cf. FIG. 2: feature vectors 71) are obtained. Each feature vector is indicative of operational characteristics of a technical device (cf. FIG. 1: system 90 and technical device 99 providing the state data 81).

The one or more feature vectors may be determined based on state data obtained from the technical device. The one or more feature vectors may be loaded from a memory.

Next, at box 3010, it is possible to determine, for each one of the one or more feature vectors obtained at box 3005, a respective feature relevance matrix (cf. FIG. 2: feature relevance vector 62). The feature relevance matrices include multiple univariate feature relevance values associated with the feature values of the feature vectors and indicative of the relevance of each feature value with respect to the prediction of the ML algorithm. Shapley values may be used as the relevance values, see Lundberg, Scott M., and Su-In Lee. "A unified approach to interpreting model predictions." Ad*vances in neural information processing systems* 30 (2017): Equation 4 and associated explanations.

The univariate feature relevance values are the diagonal elements of the feature relevance matrices.

The feature relevance matrices can also include multiple bivariate feature interaction relevance values associated with pairs of feature values of the feature vectors and indicative of the pairwise relevance of each pair of feature values with respect to the prediction of the ML algorithm. Shapley interaction values may be used.

Next, at box 3015, it is optionally possible - if multiple feature vectors are obtained at box 3005 - to combine, for each feature of these multiple feature vectors - the respective univariate feature relevance values, to thereby obtain aggregated univariate feature relevance values for the features.

Further, optionally, it is possible at box 3020 to combine, for each pair of the features of the multiple feature vectors, the bivariate feature interaction relevance values associated with different ones of the multiple feature vectors; thereby, aggregated bivariate feature interaction relevance values are obtained for the pairs of the features.

The techniques described above are now further detailed in mathematical terms.

Data is given by $X = (x,y)$ where $x = (x_i)_{i=1,...,n}$ represents $n$ input data points, each represented by a k-dimensional feature vector $x_i \in \mathbb{R}^k$ and $y = (y_i)_{i=1,...,n}$ denotes the class labels $y_i \in \mathbb{R}$ associated with the input data points, i.e., the output vectors.

An arbitrary ML algorithm $f(x_i) \approx y_i$ (e.g., Neural Network, Random Forest, etc.) is trained to predict the class labels from the input data, i.e., determine the output vectors $y_i$ based on the input vectors $x_i$. The prediction task could be a regression problem or a classification problem if the output can be represented by a real valued number (e.g., probabilities, scores, regression values, log-odds) such that $f: \mathbb{R}^k \to \mathbb{R}$ No further restrictions are required for $f(.)$.

Next, feature relevance vectors are determined, one for each feature vector (cf. box 3010). I.e., instance-level feature relevance scores are determined. Such scores can be derived with standard local XAI methods such as SHAP or LIME. For simplicity, hereinafter Shapley relevance values are considered, which can be approximated with SHAP; however, similar concepts also exist from other XAI methods.

For Shapley values, the relevance of feature $i$ for the prediction for data point $x$ is given as

$$\phi_j(x) = \sum_{S \subseteq \{1,...,k\}\setminus\{j\}} \frac{|S|!\,(k - |S| - 1)!}{k!} \big(f(x; S \cup \{j\}) - f(x; S)\big),$$

where S denotes all possible subsets of feature values and $f(x;S)$ is the prediction for $x$ given fixed values for the features contained in $S$ and marginalizing over the remaining features. See Lundberg, Scott M., and Su-In Lee. "A unified approach to interpreting model predictions." *Advances in neural information processing systems* 30 (2017): Equation 4 and associated explanations. The right-hand term $(f(x; S \cup \{j\})$ - $f(x;S))$ corresponds to the marginal contribution of the respective Shapley value; while the left-hand term corresponds to a weighted average, given equal weight to all possible combinations.

Intuitively, the Shapley value quantifies the contribution of feature $j$ to the output $f(x)$ and it holds that

$$\sum_{j=1,\dots,k} \phi_j(x) = f(x) - E_X[f(X)],$$

where $E_X[f(X)]$ denotes the expected output (in the notation "lower case" $x$ denotes a concrete feature value, while "upper case" $X$ denotes the possible distribution of the respective random variable).

That is, the model output can be decomposed into the expected model output and the individual contributions of the feature values. Note that feature relevance values can have a positive or negative sign, depending on whether they increase or decrease the prediction in relation to the expected prediction. For convenient notation:

$$\phi(x_i) = \big(\phi_1(x_i), \dots, \phi_k(x_i)\big)$$

i.e., $\phi(x_i)$ is given as the vector containing all Shaply values for a certain input feature vector $i$.

In addition, feature interaction relevance values for pairs of features, are determined. Such values can be derived in a similar fashion and SHAP provides means to compute approximations for these values as well. For a pair of features $i$ and $j$, the feature interaction is given as

$$\phi_{i,j}(x) = \sum_{S \subseteq \{1,\dots,k\}\setminus\{i,j\}} \frac{|S|!\,(k-|S|-2)!}{2(k-1)!} (f(x; S\cup\{i,j\}) - f(x; S\cup\{i\}) - f(x; S\cup\{j\}) + f(x; S))$$

Similarly, as for the univariate Shapley values, the model output can be decomposed as

$$\sum_{i=1,\dots,k} \phi_i(x) + \sum_{i\neq j \in \{1,\dots,k\}} \phi_{i,j}(x) = f(x) - E_X[f(X)],$$

such that the model output can be decomposed into the expected model output, the univariate feature relevance values, and the bivariate feature interaction reference values.

Next, at box 3025 it is possible to determine a graph (cf. FIG. 2: graph 40). The graph can be determined based on the aggregated univariate feature relevance values and the aggregated bivariate feature interaction relevance values, if boxes 3015 and 3020 are executed.

It would also be possible to determine the graph based on the univariate feature relevance values and bivariate feature interaction relevance values determined for a selected feature vector of the at least one feature vector obtained at box 3005. It would also be possible to determine multiple graphs for multiple feature vectors.

In case the graph is determined based on the aggregated univariate feature relevance values and the aggregated bivariate feature interaction relevance values, a global feature graph is obtained (because the impact of features and feature pairs across multiple feature vectors is considered); else, if the graph is determined based on the univariate feature relevance values and bivariate feature interaction relevance values of a selected feature vector, a local feature graph is obtained (because only the selected feature vectors considered).

For the local feature graph, as well as for the global feature graph, nodes of the graph are associated with the features captured by the one or more feature vectors. Edges of the local feature graph correspond to the respective bivariate feature interaction relevance values of the respective pair of features. Edges of the global feature graph correspond to the aggregated bivariate feature interaction relevance values of the respective pair of features.

In general, an undirected graphs $G = (V, E)$ is considered, where $V$ denotes a set of nodes representing individual entities (e.g., data points of features) and $E \subset V \times V$ denotes a set of edges connecting certain pairs of nodes. A graph can be represented by an adjacency matrix $A = \big(a_{i,j}\big) \in \mathbb{R}^{|V|\times|V|}$, where $a_{i,j}$ corresponds to a numerical weight attached to the edge between vertex $i$ and vertex $j$. The diagonal elements $diag(A) = (a_{j,j})$ provide weights for self-loops and can be used to encode univariate properties of the nodes.

The first variant of feature graphs is the local feature graph that may also be termed instance-level feature graph or instance-level feature interaction graph. Each local feature graph corresponds to a single feature vector. Thereby, each node of the local feature graph corresponds to a feature and the edge weights correspond to the univariate feature relevance values and the bivariate feature interaction values. Formally, $a_{i,i} = \phi_i(x) \; \forall i$ and $a_{i,j} = \phi_{i,j}(x) \; \forall i \neq j$ for a given data point $x$. For numerical reasons, usually most $\phi_{i,j}(x)$ will be non-zero for most $i,j$, leading to dense or even complete local feature graph. For display, the local feature graph can be sparsified by retaining only the edges with the highest absolute weights. In addition, the L1-normalized absolute weights can be displayed to highlight relative absolute importance.

A local feature graph provides a structured and comprehensible explanation for a single feature vector by highlighting not only feature relevance values, but also interactions between pairs of features. In particular, it can reveal important interactions between features that, by themselves, are relatively unimportant. Such insights cannot be revealed using existing XAI methods. Feature interactions could be checked by domain experts for plausibility and consistency with physical theory.

As a variant for global explanations, global feature graphs can be used, where the nodes represent features and the edge weights correspond to feature relevance and feature interaction relevance values aggregated over multiple feature vectors, from a dataset $X$, e.g., a validation or test dataset.

The univariate feature relevance values $\phi_i(x)$ are combined to yield the aggregated univariate feature relevance values (box 3015). Likewise, the bivariate feature interaction relevance values are combined to yield the aggregated bivariate feature interaction relevance values (box 3020). These combinations are given by:

$$a_{i,i} = \frac{1}{n}\sum_{x \in X} |\phi_i(x)| \; \forall i \quad \text{and} \quad a_{i,j} = \frac{1}{n}\sum_{x \in X} |\phi_{i,j}(x)| \; \forall i \neq j,$$

where $n$ denotes the number of samples contained in the dataset $X$.

The global feature graph allows not only for analyzing feature relevance and feature interaction relevance on a global level, but also for manual or automatic feature selection. On the one hand side, a user can select a subset of features that are most relevant or are involved in the most important interactions.

At box 3030 it is then possible to determine and output (e.g., as part of a GUI provided via an HMI) a graphical representation of the local or global feature graph.

A cognitive artifact (visualization) with effective visual encoding of the resulting graph enables an intuitive human perception of the complex data set. An interaction possibility, with the graphical representation enables the viewer to define what part and in which way the graph is visualized to amplify the problem-solving process.

The visualization fulfills the purpose of explanatory, exploratory and confirmatory analysis.

As a general rule, the graph visualization can be done with any graph visualization tool or library.

The length and/or the thickness of the edges of the graphical representation of the graph represents the similarity measure between the respective pair of features connected by that edge. This makes it possible to comprehend, whether certain data points are closely related, i.e., cooperate strongly to impact the prediction of the ML algorithm; or whether a certain pair of data points are associated with different underlying explanations for the prediction of the ML algorithm. For instance, if the edge of the graph is short and/or thick, then the corresponding pair of data points associated with that edge cooperate to impact the prediction.

Above, it has been shown how the edges of the graphical representation of the global or local feature graphs can encode the (aggregated) bivariate feature interaction relevance values.

The graphical representation of the (global) local feature graph can likewise encode the (aggregated) univariate feature relevance values associated with the respective features. For instance, a size or a color of the nodes can represent the respective (aggregated) univariate feature relevance values.

At box 3030, it would be possible to output the graphical representation of the global or local feature graph as part of a computer-aided design or maintenance process of a technical device. The feature values can in this case quantify different properties of the technical device. Thereby, the design or maintenance of the technical device can be optimized.

At optional box 3035, it would be possible to select a subset of nodes of the local or global feature graph based on at least one of the (aggregated) univariate feature relevance values or the (aggregated) bivariate feature interaction relevance values. Then, the graphical representation of the feature graph can highlight the subset of nodes. For instance, the nodes in the subset may be highlighted by color or using thicker lines. The nodes in the subset may be highlighted by zooming into the graphical representation to show the nodes at the center and a larger scale.

For example, the subset of nodes of the feature graph may be selected based on a count of the nodes in the subset. For instance, there can be a tendency to reduce the count of the nodes in the subset. More specifically, it would be possible that the subset of the nodes in the feature graph is determined using an iterative optimization technique.

The iterative optimization technique can include a goal function that penalizes a higher count of the nodes in the subset. It would be possible that the goal function rewards a higher absolute value of the sum of the at least one of the (aggregated) univariate feature relevance values or the (aggregated) bivariate feature interaction relevance values across the nodes in the subset.

In further detail: the subset selection problem can be modelled as a dense subgraph problem. The goal is to find a subgraph S of G that has a maximum total edge weight within S and, at the same time, is as small as possible. That is, the set S should contain features with high aggregated bivariate feature interaction relevance values and bivariate, aggregated feature relevance values and the set of selected features should be as small as possible. Thereby, the absolute edge weights, are considered with no regard of their signs. The subgraph density can be defined as

$$d(s) = \frac{|E_S|}{|V_S|}$$

and the problem of finding a subgraph of maximum density can be solved in polynomial time, e.g., using max flow techniques.

It is further possible to let the user define a parameter K indicating the number of features to select. In this case, the problem translates to finding a densest K-subgraph, i.e., a densest subgraph among all subgraphs with exactly K nodes. This problem is NP-hard in general, but polynomial approximation algorithms exist.

The feature set corresponding to the densest (K-)subgraph could either be highlighted in the graph visualization as a recommendation for the user or applied directly in an automated scenario.

At optional box 3040, it is possible to re-layout the graphical representation of the global or local feature graph. For instance, the nodes can be rearranged. Different subsets can be highlighted. Zooming can be possible.

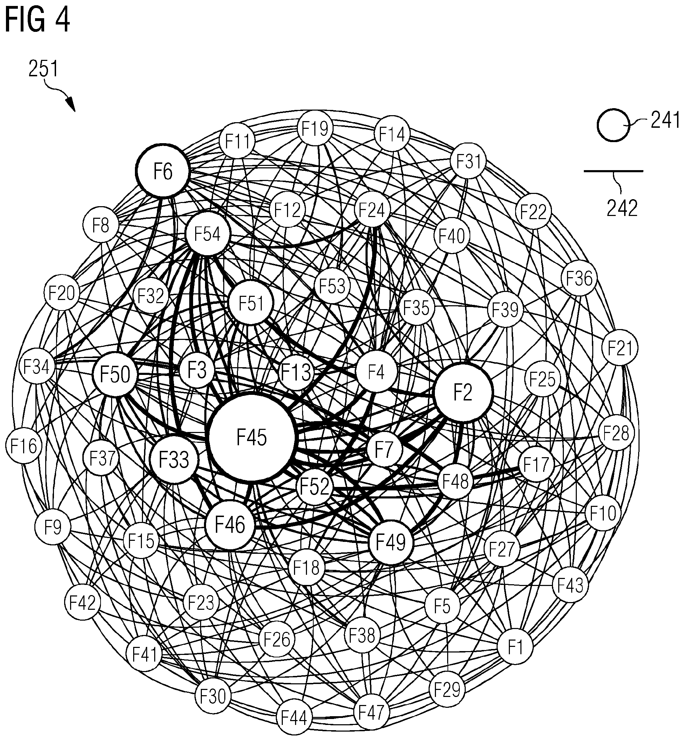

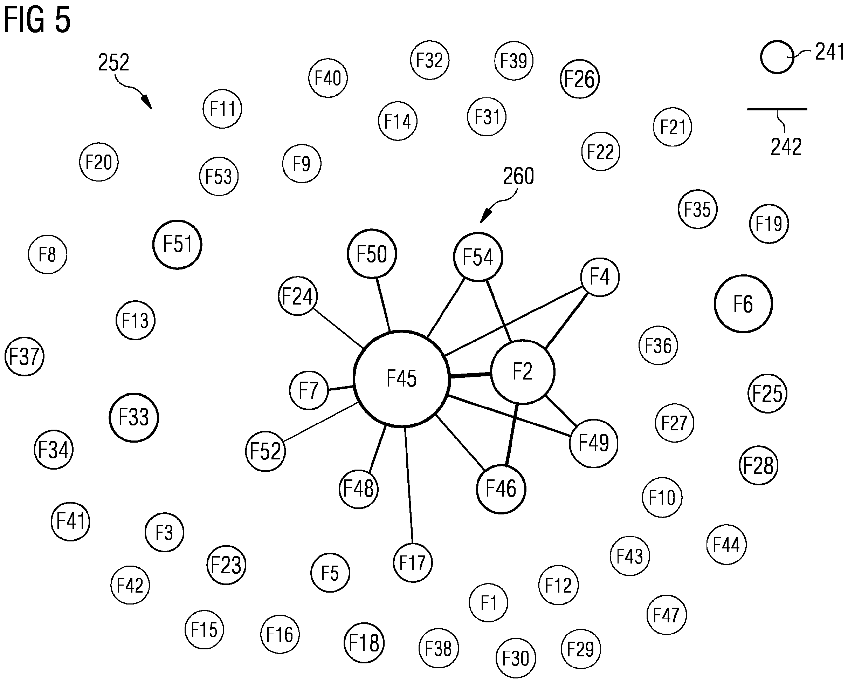

Next, some examples of a graphical representation are provided with respect to FIG. 4 and FIG. 5.

FIG. 4 illustrates the graphical representation 251 of a global feature graph. Each node 241 corresponds to a respective feature of the feature vectors (the nodes 241 are labeled "F1" through "F54", where "F" stands for feature); each edge 242 represents respective aggregated bivariate feature interaction values. In the illustrated example, the size and color of the nodes 241 represents the respective aggregated univariate feature relevance values.

As a general rule, the (aggregated) univariate feature relevance values may be re-presented in the graphical representation of the (global) or local feature graph using size (2D area), color (sequential intensity) or front sides of labels. Likewise, the (aggregated) bivariate feature interaction relevance values of the global or local feature graphs can be represented by the size (1D with of edge), color (sequential intensity) of the edges. It would also be possible to consider the position: features with a high codependency can be placed closer together, due to a layout algorithm, e.g., false directed layout.

The graphical representation may be output as an interactive element of a user interface.

Interactive functionality enables a deeper analysis to reveal the important insights. It would be possible to zoom in and zoom out. This enables the user to focus on details while still keeping the overall perspective in mind.

Filtering can be applied. Filtering can be applied to all aspects of the graphical representation. For example, a user can filter nodes depending on the (aggregated) feature relevance values. Edges can be filtered based on the (aggregated) bivariate feature interaction relevance values. Nodes may be filtered based on their edge count.

A manual or automatic relayout of the graph would be possible. For instance, such relayout may be done with various predefined algorithms. The layout could be repeated whenever the filtering leads to a new graph structure. Color maps may be changed. Based on the inherent semantic of nodes and edges the color map made have to be adjusted.

For instance, FIG. 5 illustrates a relayout of the graph underlying the graphical representation 251 of FIG. 4. The graphical representation 252 relies on filtering of edges. Also, a subset 260 is highlighted (cf. box 3035).

Such interactive features such as relayouting can be used iteratively. This enables the user to "ask" different questions to the model. The graphical representation 252 is a relayout of the graph underlying the graphical representation 251 with filtering out edges having small associated aggregated bivariate feature interaction relevance values (e.g., smaller than a threshold).

Such techniques enable a user to investigate the following aspects that were not easily possible before: intuitive understanding of features that interact with each other. A concise representation that goes beyond standard visualization with stack plots and bar plots which ignore the clustering of feature interactions. The potential for guided or automatic feature selection by building sub graphs based on subsets of all nodes. Furthermore, a global interpretation pertains to an explanation of how the machine-learning model processes and interprets data across multiple feature vectors; while a local explanation corresponds to an individual feature vector.

The provided explanations are presented in a way that is human-interpretable. Since model explanations are often complicated themselves, they need to be presented appropriately such that they can lead to actionable insights

Even without an active user, it is possible to process the generated explanations automatically.

The explanation reveals relationships between data points with respect to their explanations and provide insights about common explanation patterns shared between groups of data points as well as anomalous explanations.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, above, various aspects have been disclosed according to which an expert analyzes the graph to conclude on reasons for the prediction of the ML algorithm. According to some examples, the graph may also be processed automatically. For instance, it would be possible to automatically trigger manual inspections or provide summary reports to the operator based on the graph.

For further illustration, techniques with selecting a subset have been explained in connection with a global feature graph; but may likewise be applied to selecting a subset of nodes of a local feature graph.

## Claims

1. A computer-implemented method, comprising:

   - obtaining (3005) a plurality of feature vectors (71) indicative of operational characteristics of a technical device (99), each one of the plurality of feature vectors comprising multiple respective feature values (711-714) for respective features (711-714),
   - determining (3010), for each one of the plurality of feature vectors, univariate feature relevance values (721-724) for the feature values of the respective feature vector with respect to a prediction of a machine-learning algorithm that is based on the respective feature vector, as well as bivariate feature interaction relevance values (725) for pairs of the feature values of the respective feature vector with respect to the prediction of the machine-learning algorithm that is based on the respective feature vector,
   - combining (3015), for each feature of the feature vectors of the plurality of feature vectors, the respective univariate feature relevance values associated with different ones of the plurality of feature vectors, to obtain aggregated univariate feature relevance values for the features,
   - combining (3020), for each pair of the features of the feature vectors of the plurality of feature vectors, the bivariate feature interaction relevance values associated with different ones of the plurality of feature vectors, to obtain aggregated bivariate feature interaction relevance values for the pairs of features,
   - determining (3025) a global feature graph, wherein each node of the global feature graph is associated with a respective feature of the plurality of feature vectors, wherein edges of the global feature graph correspond to the aggregated bivariate feature interaction relevance values of the respective pair of features, and
   - determining and outputting (3030) a graphical representation (251, 252) of the global feature graph,

   wherein at least one of a length or a thickness of the edges of the graphical representation of the global feature graph represent the respective aggregated bivariate feature interaction relevance values.

2. The computer-implemented method of claim 1,
   wherein at least one of a size or a colour of the nodes of the graphical representation of the global feature graph represents the respective aggregated univariate relevance values associated with the respective features.

3. The computer-implemented method of claim 1 or 2, wherein the method further comprises:

   - selecting a subset of nodes of the global feature graph based on at least one of the aggregated univariate feature relevance values or the aggregated bivariate feature interaction relevance values,

   wherein the graphical representation of the global feature graph highlights the subset of nodes.

4. The computer-implemented method of claim 3,
   wherein the subset of nodes of the global feature graph is selected further based on a count of nodes in the subset.

5. The computer-implemented method of claim 3 or 4,
   wherein the subset of the nodes of the global feature graph is determined using an iterative optimization technique comprising a goal function that penalizes a higher count of nodes in the subset and rewards higher absolute values of a sum of the at least one of the aggregated univariate feature relevance values or the aggregated bivariate feature interaction relevance values across the nodes in the subset.

6. A computer-implemented method, comprising:

- obtaining (3005) a feature vector indicative of operational characteristics of a technical device, the feature vector comprising multiple feature values for multiple features,
- determining (3010) univariate feature relevance values (721-724) for the feature values of the feature vector with respect to a prediction of a machine-learning algorithm that is based on the feature vector, as well as bivariate feature interaction relevance values (725) for pairs of the feature values of the feature vector with respect to the prediction of the machine-learning algorithm that is based on the feature vector,
- determining (3025) a local feature graph, nodes of the local feature graph being associated with the features of the feature vector, edges of the local feature graph corresponding to the bivariate feature interaction relevance values of the respective pair of features, and
- determining and outputting (3030) a graphical representation of the local feature graph, wherein at least one of a length or a thickness of the edges of the graphical representation represents the respective bivariate feature interaction relevance values.

7. The computer-implemented method of claim 6,
   wherein at least one of a size or a colour of the nodes of the graphical representation of the local feature graph represents the univariate feature relevance values of the respective features.

8. The computer-implemented method of any one of the preceding claims,

   wherein the graphical representation is output as part of a computer-aided design or maintenance process of the technical device,
   wherein the features quantify different properties of the technical device.

9. A computer program comprising program code executable by at least one processor, the at least one processor, upon executing the program code, being configured to perform:

   - obtaining (3005) a plurality of feature vectors (71) indicative of operational characteristics of a technical device (99), each one of the plurality of feature vectors comprising multiple respective feature values (711-714) for respective features (711-714),
   - determining (3010), for each one of the plurality of feature vectors, univariate feature relevance values (721-724) for the feature values of the respective feature vector with respect to a prediction of a machine-learning algorithm that is based on the respective feature vector, as well as bivariate feature interaction relevance values (725) for pairs of the feature values of the respective feature vector with respect to the prediction of the machine-learning algorithm that is based on the respective feature vector,
   - combining (3015), for each feature of the feature vectors of the plurality of feature vectors, the respective univariate feature relevance values associated with different ones of the plurality of feature vectors, to obtain aggregated univariate feature relevance values for the features,
   - combining (3020), for each pair of the features of the feature vectors of the plurality of feature vectors, the bivariate feature interaction relevance values associated with different ones of the plurality of feature vectors, to obtain aggregated bivariate feature interaction relevance values for the pairs of features,
   - determining (3025) a global feature graph, wherein each node of the global feature graph is associated with a respective feature of the plurality of feature vectors, wherein edges of the global feature graph correspond to the aggregated bivariate feature interaction relevance values of the respective pair of features, and
   - determining and outputting (3030) a graphical representation (251, 252) of the global feature graph, wherein at least one of a length or a thickness of the edges of the graphical representation of the global feature graph represent the respective aggregated bivariate feature interaction relevance values.

10. The computer program according to claim 9, wherein the at least one processor, upon executing the program code, is further configured to perform the method of any one of claims 1 to 5.

11. A device comprising at least one processor and a memory, the at least one processor being configured to load, from the memory, program code and to execute the program code, the at least one processor, upon executing the program code, being configured to perform:

   - obtaining (3005) a plurality of feature vectors (71) indicative of operational characteristics of a technical device (99), each one of the plurality of feature vectors comprising multiple respective feature values (711-714) for respective features (711-714),
   - determining (3010), for each one of the plurality of feature vectors, univariate feature relevance values (721-724) for the feature values of the respective feature vector with respect to a prediction of a machine-learning algorithm that is based on the respective feature vector, as well as bivariate feature interaction relevance values (725) for pairs of the feature values of the respective feature vector with respect to the prediction of the machine-learning algorithm that is based on the respective feature vector,

- combining (3015), for each feature of the feature vectors of the plurality of feature vectors, the respective univariate feature relevance values associated with different ones of the plurality of feature vectors, to obtain aggregated univariate feature relevance values for the features,
- combining (3020), for each pair of the feature of the feature vectors of the plurality of feature vectors, the bivariate feature interaction relevance values associated with different ones of the plurality of feature vectors, to obtain aggregated bivariate feature interaction relevance values for the pairs of features,
- determining (3025) a global feature graph, wherein each node of the global feature graph is associated with a respective feature of the plurality of feature vector, wherein edges of the global feature graph correspond to the aggregated bivariate feature interaction relevance values of the respective pair of features, and
- determining and outputting (3030) a graphical representation (251, 252) of the global feature graph, wherein at least one of a length or a thickness of the edges of the graphical representation of the global feature graph represent the respective aggregated bivariate feature interaction relevance values.

12. The device of claim 11, wherein the at least one processor, upon executing the program code, is further configured to perform the method of any one of claims 6 to 9.

13. A computer program comprising program code executable by at least one processor, the at least one processor, upon executing the program code, being configured to perform:

- obtaining (3005) a feature vector indicative of operational characteristics of a technical device, the feature vector comprising multiple feature values for multiple features,
- determining (3010) univariate feature relevance values (721-724) for the feature values of the feature vector with respect to a prediction of a machine-learning algorithm that is based on the feature vector, as well as bivariate feature interaction relevance values (725) for pairs of the feature values of the feature vector with respect to the prediction of the machine-learning algorithm that is based on the feature vector,
- determining (3025) a local feature graph, nodes of the local feature graph being associated with the features of the feature vector, edges of the local feature graph corresponding to the bivariate feature interaction relevance values of the respective pair of features, and
- determining and outputting (3030) a graphical representation of the local feature graph, wherein at least one of a length or a thickness of the edges of the graphical representation represents the respective bivariate feature interaction relevance values.

14. The computer program according to claim 13, wherein the at least one processor, upon executing the program code, is further configured to perform the method of any one of claims 6 to 8.

15. A device comprising at least one processor and a memory, the at least one processor being configured to load, from the memory, program code and to execute the program code, the at least one processor, upon executing the program code, being configured to perform:

- obtaining (3005) a feature vector indicative of operational characteristics of a technical device, the feature vector comprising multiple feature values for multiple features,
- determining (3010) univariate feature relevance values (721-724) for the feature values of the feature vector with respect to a prediction of a machine-learning algorithm that is based on the feature vector, as well as bivariate feature interaction relevance values (725) for pairs of the feature values of the feature vector with respect to the prediction of the machine-learning algorithm that is based on the feature vector,
- determining (3025) a local feature graph, nodes of the local feature graph being associated with the features of the feature vector, edges of the local feature graph corresponding to the bivariate feature interaction relevance values of the respective pair of features, and
- determining and outputting (3030) a graphical representation of the local feature graph, wherein at least one of a length or a thickness of the edges of the graphical representation represents the respective bivariate feature interaction relevance values.

FIG 1

FIG 2

## FIG 3

3005

3010

3015

3020

3025

3030

3035

3040

FIG 4

# FIG 5

EP 4 328 806 A1

Europäisches
Patentamt

European
Patent Office

Office européen
des brevets

## EUROPEAN SEARCH REPORT

Application Number

EP 22 19 1435

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | P. KUMAR, M. SHARMA: "Feature-Importance Feature-Interactions (FIFI) graph: a graph-based novel visualization for interpretable machine learning", PROCEEDINGS OF THE 2021 INTERNATIONAL CONFERENCE ON INTELLIGENT TECHNOLOGIES (CONIT'21), 25 June 2021 (2021-06-25), XP033951188, DOI: 10.1109/CONIT51480.2021.9498467 * sections II-IV * | 1-15 | INV. G06N5/022 G06N5/045 G06N20/00 ADD. G06N3/126 |
| X | P. MROZ ET AL: "GBEx: towards graph-based explanations", PROCEEDINGS OF THE 32ND INTERNATIONAL CONFERENCE ON TOOLS WITH ARTIFICIAL INTELLIGENCE (ICTAI'20), 9 November 2020 (2020-11-09), pages 112-117, XP093020820, DOI: 10.1109/ICTAI50040.2020.00028 * sections III and IV * | 1-15 | |
| X | A. Masoomi et al: "Explanations of black-box models based on directional feature interactions", OpenReview.net (29 Sept 2021; imported: 14 Mar 2022), 14 March 2022 (2022-03-14), XP093020799, Retrieved from the Internet: URL:https://openreview.net/references/pdf?id=HTD8_bBaZ9 [retrieved on 2023-02-03] * sections 4 and 5 * | 1-15 | TECHNICAL FIELDS SEARCHED (IPC) G06N |

—/--

The present search report has been drawn up for all claims

| Place of search | Date of completion of the search | Examiner |
|---|---|---|
| The Hague | 15 February 2023 | Douarche, Nicolas |

EPO FORM 1503 03.82 (P04C01)

Europäisches Patentamt
European Patent Office
Office européen des brevets

# EUROPEAN SEARCH REPORT

Application Number

EP 22 19 1435

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | B. ROZEMBERCZKI ET AL: "The Shapley value in machine learning", ARXIV.ORG, CORNELL UNIVERSITY LIBRARY, 201 OLIN LIBRARY CORNELL UNIVERSITY ITHACA, NY 14853, 26 May 2022 (2022-05-26), XP091217274, DOI: 10.48550/arXiv.2202.05594 * the whole document * | 1-15 | |
| A | M. N. HOQUE, K. MUELLER: "Outcome-explorer: a causality guided interactive visual interface for interpretable algorithmic decision making", ARXIV.ORG, CORNELL UNIVERSITY LIBRARY, 201 OLIN LIBRARY CORNELL UNIVERSITY ITHACA, NY 14853, 25 February 2022 (2022-02-25), XP091145364, DOI: 10.48550/arXiv.2101.00633 * the whole document * | 1-15 | |
| A | M. CHROMIK: "Making SHAP rap: bridging local and global insights through interaction and narratives", LECTURE NOTES IN COMPUTER SCIENCE, vol. 12933, 26 August 2021 (2021-08-26), pages 641-651, XP047606298, DOI: 10.1007/978-3-030-85616-8_37 * the whole document * | 1-15 | TECHNICAL FIELDS SEARCHED (IPC) |

-/--

The present search report has been drawn up for all claims

| Place of search | Date of completion of the search | Examiner |
|---|---|---|
| The Hague | 15 February 2023 | Douarche, Nicolas |

Europäisches Patentamt
European Patent Office
Office européen des brevets

# EUROPEAN SEARCH REPORT

Application Number

EP 22 19 1435

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | M. BRITTON: "VINE: visualizing statistical interactions in black box models", ARXIV.ORG, CORNELL UNIVERSITY LIBRARY, 201 OLIN LIBRARY CORNELL UNIVERSITY ITHACA, NY 14853, 1 April 2019 (2019-04-01), XP081163141, DOI: 10.48550/arXiv.1904.00561 * the whole document * ----- | 1-15 | |

TECHNICAL FIELDS SEARCHED (IPC)

The present search report has been drawn up for all claims

| Place of search | Date of completion of the search | Examiner |
|---|---|---|
| The Hague | 15 February 2023 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 3